# EUROPEAN PATENT APPLICATION

(11) **EP 0 846 416 A1**
(43) Date of publication of application: **10.06.1998**
(21) Application number: 97309606.8
(22) Date of filing: 28.11.1997
(51) Int. Cl.: A01N 43/78

(54) **A method to control plant fungal diseases**

(30) Priority: 04.12.1996 US 27426 P
(71) Applicant: ROHM AND HAAS COMPANY, Philadelphia, Pennsylvania 19106-2399 (US)
(72) Inventor: Tillett, Thomas Crawford, Ambler, PA 19002 (US); Decker, George Adolph, The Landings, Sarasota, FL 34231 (US)
(74) Representative: Tanner, James Percival

(57) **Abstract**

The present invention relates to a method for controlling foliar fungal diseases on certain plants by treating the plant seed, before planting, with a 5-substituted thiazole fungicide of the formula: 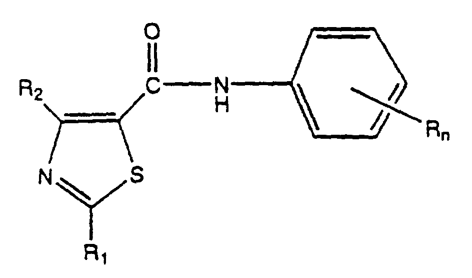 wherein:
each R is independently an electron withdrawing group;
R₁ and R₂ are each independently selected from (C₁-C₅)alkyl
and (C₁-C₂)haloalkyl, provided that at least one of R₁ and R₂ is selected from (C₁-C₂)haloalkyl; and
n is from 1 to 5;
and agronomically acceptable salts thereof.

## Description

The present invention relates to a method for controlling foliar fungal diseases on certain plants by treating the plant seed, before planting, with a 5-carboxanilido-haloalkylthiazole fungicide. The invention also provides seeds which grow into foliar fungal disease resistant plants.

Various fungicides are known which can be applied to plant seeds to provide early protection against fungal diseases affecting the seedling or the seed. A known fungicide, 2-amino-4-methyl-5-(carboxanilido)thiazole has been used as such a seed treatment One major problem with the majority of fungicides used for seed treatment is that the protection is usually short-lived, typically only protecting the seed itself or extending until shortly after the seedling emerges. In order to continue to protect the emerged plant from subsequent disease development the plant foliage is treated with additional fungicide. There is a continuing need, therefore, for new seed treatment fungicides which provide protection against fungal diseases for a longer period of time in the plant growth cycle, preferably the entire growing season, and which provide such protection at lower use rates than existing products.

U. S. Patent No. 5,045,554 discloses a class of substituted 5-carboxanilidothiazoles useful for control of plant fungus disease such as, for example *Basidiomycetes* such as *Rhizoctonia, Sclerotium,* and *Corticium,* as well as *Alternaria* and *Spirothica,* when applied to the growing plant, preferably as a foliar spray. We have discovered that surprisingly long term, often season-long, control of such diseases is obtained when the plant seed is treated with the compounds of U. S. Patent No. 5,045,554. This provides a significant advantage to the grower because one or more foliar fungicide applications to the growing crop is eliminated.

The present invention is a method comprising applying to a plant seed a fungicidally effective amount of a composition comprising one or more compounds selected from compounds of formula I and agronomically acceptable salts thereof. Plants subsequently grown from the seed are resistant to fungal diseases. However, such resistance is limited to those diseases controlled by the compounds of the composition or their agronomically acceptable salts. The fungal diseases which are controlled by the composition are known or easily determined by evaluating fungal disease control on similar plants using foliar applications of the compound, its agronomically acceptable salts, or the composition itself.

The compounds of the composition of the present invention are of the formula I: 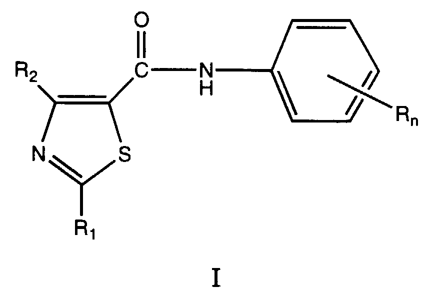 wherein R₁ is a (C₁-C₂)haloalkyl or (C₁-C₅)alkyl, preferably (C₁-C₂)alkyl, most preferably methyl; R₂ is a (C₁-C₅)alkyl or a (C₁-C₂)haloalkyl, preferably halomethyl, more preferably perhalomethyl, most preferably trifluoromethyl; provided that at least one of R₁ and R₂ is a (C₁-C₂)haloalkyl; and n is from one to five wherein at least one of Rₙ is an electron withdrawing group, preferably there are two to four electron withdrawing groups, most preferably three to four electron withdrawing groups on the carboxanilido ring. Preferably, the electron withdrawing groups are located in the ortho or para positions and most preferably in the ortho positions. Preferably the para substituent, if any, also has lipophilic character. The electron withdrawing groups are preferably independently selected from halo (preferably chloro, bromo, or iodo), halo(C₁-C₅)alkyl (preferably halo(C₁-C₂)alkyl, more preferably perhalomethyl or trifluoromethyl), or halo(C₁-C₅)alkoxy (preferably halo(C₁-C₂)alkoxy, more preferably perhalomethoxy or trifluoromethoxy). Other suitable electron withdrawing ring substituents include nitro, cyano, pentahalosulfur (preferably pentafluorosulfur), halomethylthio, haloethylthio, (C₁-C₂)alkylsulfinyl, halo(C₁-C₂)alkylsulfinyl, (C₁-C₂)alkylsulfonyl, and halo(C₁-C₂)alkylsulfonyl. Haloethyl, haloethoxy, haloethylthio, haloethylsulfinyl, and haloethylsulfonyl electron withdrawing substituents preferably have at least one halo substituent on the 1-carbon atom and most preferably two halo substituents on the 1-carbon atom. Agronomically acceptable salts of these compounds, including alkali, alkaline earth, acid addition, base addition, and alkylation salts, also provide foliar control of fungal diseases when used to treat plant seeds. A preferred compound of this invention is 2',6'-dibromo-2-methyl-4'-trifluoromethoxy-4-trifluoromethyl-1,3-thiazole-5-carboxanilide, known under the common name thifluzamide.

Such compounds are prepared by procedures as disclosed in U. S. Patent No. 5,045,554 (see particularly columns 4-15) by reacting an appropriately substituted thiazole having a 5-carbonylchloride substituent with an appropriately substituted aniline in suitable solvent(s) at an elevated temperature.

The term "applying to the plant seed" means that the compound and the seed are brought together in such a way as to provide reasonably continuous contact between the compound and the seed during the storage, transporting, and planting of the seed. The compound, and its agronomically acceptable salts (hereinafter referred to as the "compound"), can be in the form of pure compound, technical grade of the compound, or a formulation of the compound. Formulations of the compound are prepared by admixing the compound with one or more adjuvants including diluents, extenders, carriers, surfactants, and conditioning agents to provide compositions in the form of particulate solids, solutions, dispersions, or emulsions. Such compositions include, for example, wettable powders, granulars, dusts, emulsifiable concentrates, and flowables. Surprisingly, the technical grade of many of the compounds is suitable for treating the seed without further formulation.

The term "fungicidally effective amount" means the quantity of compound which provides a desired level of fungal disease control in the plant grown from the seed. Since in most cases a limited amount of foliar fungal disease in a crop is tolerated without causing a significant reduction in the crop's economic value, it is not always necessary to achieve 100% control. One skilled in the art will be able to determine the tolerated level of disease under the particular conditions encountered and determine the amount of compound which must be applied to the seed in order to achieve the desired level of control.

In addition to the fungicidal compounds of this invention, compositions for treating the seeds may contain other agricultural chemicals such as, for example, other fungicides, fertilizers, insecticides, herbicides, other pesticides, and safeners.

Another embodiment this invention provides seeds comprising a seed and a composition comprising one or more compounds selected from a compound of formula I and agronomically acceptable salts thereof. Such seeds grow into plants which are resistant to foliar fungal diseases controlled by the composition.

The exact amount of compound needed to provide the desired level of control of the fungal disease will vary depending upon the growing conditions, the susceptibility of the plant to the disease, the type of seed, the compound's formulation, phytotoxic effects of the formulation on the plant, and the specific compound employed. One skilled in the art can readily determine the optimum amount of compound required. Typically, the compound will be applied at rates of from 0.1 to 2000 grams per 100 kilograms of seed, preferably 1 to 100 grams per 100 kilograms of seed, most preferably 20 to 100 grams per 100 kilograms of seed.

The compound can be applied to the seed using any one of the many known seed treatment methodologies. For example, the seed may be soaked in a solution or suspension of the compound in a non-phytotoxic liquid from a few minutes up to 24 hours, depending on the concentration of the compound in the liquid, and then separated from the liquid and dried. Another method is to prepare a mixture of the compound in a suitable solvent, spray the mixture onto dry seed, mix well, and then dry. . It is not necessary to uniformly coat the seed with compound. Again, one skilled in the art can readily determine what treatment methodology to use depending on the form of the compound, the type of seed, and the desired rate of application of compound to the seed. Other methods of coating the seeds are provided in the following examples.

Although the method of this invention is applicable to a wide variety of plant seeds, it is particularly applicable to small seeded agricultural crops including cereals such as wheat, barley, oats, and corn, rice, and legumes. The method is effective in controlling many of the major crop fungal diseases such as, for example, wheat rust, rice sheath blight, and peanut white mold, rust, and limb rot.

### Example 1 - Evaluation of Control of Rice Sheath Blight (Rhizoctonia solani)

A sample of 98% technical grade thifluzamide (2',6'-dibromo-2-methyl-4'-trifluoromethoxy-4-trifluoromethyl-1,3-thiazole-5-carboxanilide) in the form of a sticky brownish-gray powder was used in this example. Due to the sticky properties of thifluzamide and its ease of coating seed, the seed was treated with only the technical thifluzamide with no other additives or water.

A five kilogram (kg) quantity of rice seed was placed in a 5-gallon plastic bucket and the bucket was inserted into a holder connected to a belt and a 1/4-horse power motor. A steel blade was inserted into the bucket to ensure proper mixing of seed during the rotation of the bucket. The bucket was rotated at approximately a 60 degree angle at 50 rpm. During rotation, the thifluzamide powder was sprinkled over the continuously-changing upper layer of rice seed. Once all the thifluzamide was applied, mixing was continued for an additional 15 minutes. The rice seed was treated with thifluzamide at four rates:

| | |
|---|---|
| 200 g per 100 kg seed | equal to 10.00 g per 5 kg seed |
| 125 g per 100 kg seed | equal to 6.25 g per 5 kg seed |
| 75 g per 100 kg seed | equal to 3.75 g per 5 kg seed |
| 25 g per 100 kg seed | equal to 1.25 g per 5 kg seed |

All rice seed appeared to be coated to some extent with thifluzamide; however, the low rate of thifluzamide was insufficient to saturate all of the potential sticking sites on the rough surface of the rice. Only a trace amount of thifluzamide appeared to remain on the plastic bucket after mixing because the rice seeds provided a more favorable site for adhesion.

The rice seeds were planted and the disease control was evaluated through the growing season (June to August). Table 1 summarizes the results of the evaluation.

**Table 1**

| Rate | Stand* | % Infection |
|---|---|---|
| 25 g | 1.26 | 32.5 |
| 50 g | 1.30 | 25.0 |
| 125 g | 1.25 | 16.3 |
| 200 g | 1.57 | 12.5 |
| Untreated | 1.00 | 40.0 |

| | | |
|---|---|---|
| * = Relative number of plants per unit area compared to untreated | | |

These data indicate that thifluzamide provided significant control of sheath blight. In addition, the plant stand count was also significantly improved over the untreated seed at all rates.

### Example 2 - Evaluation of Control of Wheat Leaf Rust (Puccinia graminis)

Approximately 25 g of wheat seed was weighed out per treatment. The seeds were placed in 4-oz glass jars with the correct amount of thifluzamide. Three different formulations of thifluzamide were used: 1) the technical grade described above, 2) a 50% by weight dry granule (WDG), and 3) a 50% by weight wettable powder (WP).

The jars were gently rotated until over 90% of the technical, wettable powder, or dispersible granule material had adhered to the wheat seed. This usually required 2 to 3 minutes of hand rotation of the jars. Where very low rates of thifluzamide were tested, the fungicide was diluted with talc powder to achieve a volume of material that could be effectively handled. A talc treatment and untreated seeds served as untreated checks for this part of the test.

The following treatment rates were used:

| | |
|---|---|
| 2000 g per 100 kg seed | equal to 500 mg per 25 g seed |
| 500 g per 100 kg seed | equal to 125 mg per 25 g seed |
| 100 g per 100 kg seed | equal to 25 mg per 25 g seed |
| 20 g per 100 kg seed | equal to 5 mg per 25 g seed |
| 5 g per 100 kg seed | equal to 1.25 mg per 25 g seed |
| 1 g per 100 kg seed | equal to 0.25 mg per 25 g seed |
| 0.2 g per 100 kg seed | equal to 0.05 mg per 25 g seed |
| 0.05 g per 100 kg seed | equal to 0.0125 mg per 25 g seed |

One day after treatment, the seed was uniformly planted into five 3-inch pots. Each pot received approximately 100 seeds per pot. After planting in pots, any material remaining on the inside of the glass jar was scraped off and sprinkled over the seeds. The growth medium was a soil-less mixture of peat moss, perlite, and vermiculite. The seedlings were maintained under greenhouse conditions.

Six days after planting (four days after germination) plants were inoculated with uredospores of wheat leaf rust (*Puccinia graminis*). The spores were suspended in a light mineral oil and misted onto the plants. Following this inoculation, the plants were placed in a mist chamber at 20° C for 24 hr to allow for infection to occur. The plants were then maintained in a greenhouse for the duration of the test. Thirteen days after planting the disease control was evaluated. Table 2 summarizes the results of the evaluation.

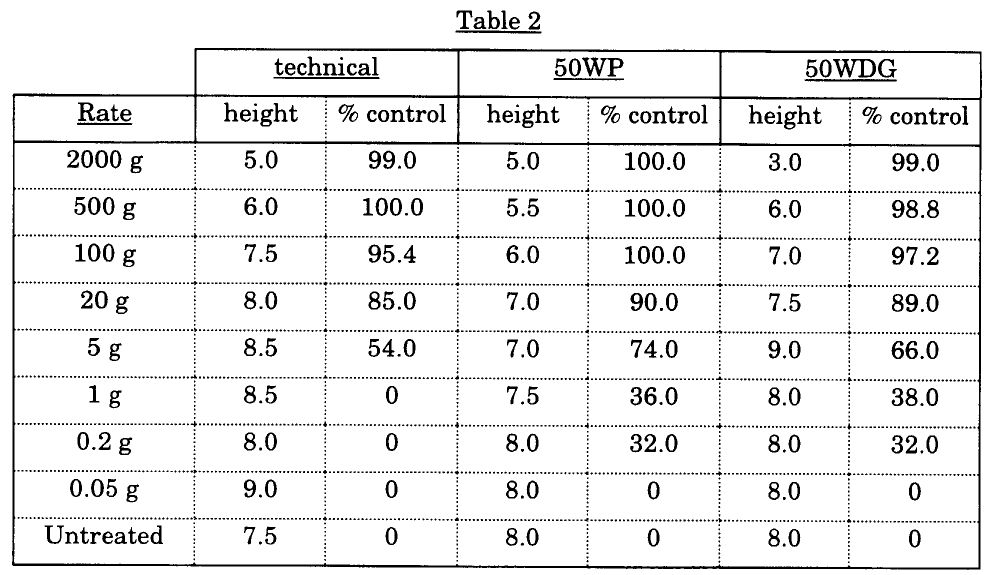

These data demonstrate that in addition to different rates, different formulations may provide different levels of disease control and have different phytotoxic effects (determined by plant height) on the plants.

## Claims

1. A method comprising applying to a plant seed a fungicidally effective amount of a composition comprising one or more compounds selected from compounds of the formula: 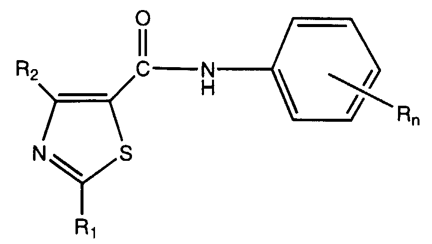 wherein:
each R is independently an electron withdrawing group;
R₁ and R₂ are each independently selected from (C₁-C₅)alkyl and (C₁-C₂)haloalkyl, provided that at least one of R₁ and R₂ is selected from (C₁-C₂)haloalkyl; and
n is from 1 to 5;
and agronomically acceptable salts thereof.

2. The method of Claim 1 wherein plants subsequently grown from the seed are resistant to foliar fungal diseases.

3. The method of Claim 1 wherein the composition comprises a compound of the formula: 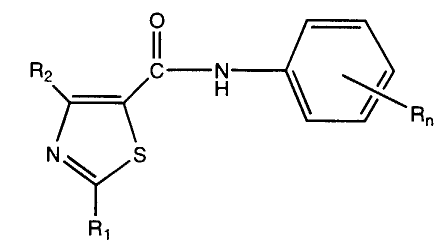 wherein:
each R is an electron withdrawing group independently selected from chloro, bromo, iodo, halo(C₁-C₅)alkyl, halo(C₁-C₅)alkoxy, nitro, cyano, halomethylthio, haloethylthio, (C₁-C₂)alkylsulfinyl, halo(C₁-C₂)alkylsulfinyl, (C₁-C₂)alkylsulfonyl, and halo(C₁-C₂)alkylsulfonyl;
R₁ and R₂ are each independently selected from (C₁-C₅)alkyl and (C₁-C₂)haloalkyl, provided that at least one of R₁ and R₂ is selected from (C₁-C₂)haloalkyl; and
n is from 2 to 4;
and agronomically acceptable salts thereof.

4. The method of Claim 3 wherein the composition comprises a compound of the formula: 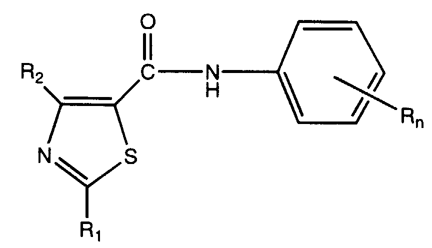 wherein:
each R is an electron withdrawing group independently selected from chloro, bromo, and halo(C₁-C₅)alkoxy;
R₁ is methyl;
R₂ is halomethyl; and
n is 3;
and agronomically acceptable salts thereof.

5. The method of Claim 4 wherein the compound of the composition is 2',6'-dibromo-2-methyl-4'-trifluoromethoxy-4-trifluoromethyl-1,3-thiazole-5-carboxanilide.

6. The method of Claim 2 wherein the foliar fungal disease is a *Basidiomycetes* fungal disease.

7. The method of Claim 1 wherein the plant seed is selected from rice, cereal grain, and legume seeds.

8. The method of Claim 7 wherein the plant seed is selected from rice, wheat, and peanut seeds.

9. A composition comprising a plant seed and the composition of Claim 1.

10. The composition of Claim 9 wherein the plant seed is selected from rice, cereal grain, and legume seeds.
